# EUROPEAN PATENT SPECIFICATION

(11) **EP 2 286 990 B1**
(45) Date of publication and mention of the grant of the patent: **09.10.2013**
(21) Application number: 09010675.8
(22) Date of filing: 19.08.2009
(51) Int. Cl.: B32B 7/06, B32B 43/00

(54) **Method to separate an adhesive material from a releasable substrate using an impact**
Verfahren zum Lösen eines Klebstoffs von einem ablösbaren Substrat unter Anwendung eines Stoßes
Procédé de séparation de matériau adhésif à partir d'un substrat libérable utilisant un impact

(43) Date of publication of application: 23.02.2011
(73) Proprietor: NITTO EUROPE N.V, 3600 Genk (BE)
(72) Inventor: Parloo, Eli, 3600 Genk (BE); Wirix, Michel, 3600 Genk (BE)
(74) Representative: Grünecker, Kinkeldey, Stockmair & Schwanhäusser

(56) References cited:
- EP-A2- 0 298 200
- US-A1- 2002 092 623
- US-A1- 2003 183 327
- US-B1- 6 210 524

## Description

The present invention relates to a method to separate an adhesive material from a releasable substrate attached to the adhesive material by fixing the releasable substrate with respect to the adhesive material and peeling off the substrate from the adhesive material, as well as a release apparatus for separating a releasable substrate from an adhesive material.

Adhesive components are widespreadly used in industry and private applications having various designs, assemblies and materials. In general, a complete adhesive component comprises a backing, such as a plastic film, a fabric, a damping material, a mold component etc., one or more adhesive layers superposed on the backing and a releasable liner or backing material for the protection of the adhesive surface superposed on the outer sticky surface of the adhesive layers. Such a releasable liner protects the application side of the adhesive layers prior to the application of the adhesive component, but can be easily removed from the adhesive layers prior to the application without providing any damages or degeneracy to the adhesive.

The problems and defects related with the peeling of a release liner from the sticky surface of a respective adhesive component depend on the visco-elastic properties of the adhesive material. Unlike pure elastic substrates such as rubber, visco-elastic materials have an elastic part and a viscous part. The viscosity of a visco-elastic material provides a strain rate dependent on time, i.e. if a force is held constant, the strain increases with time. Thus, to avoid or reduce a viscous behavior of the adhesive material, the release liner is peeled off fast from the surface of the adhesive material. When removing the release liner fast relative to the sticky surface of the adhesive material, in general the cohesion within the adhesive material is larger than the adhesion between the sticky surface of the adhesive material and the surface of a release liner, wherein the adhesion is dependent on the surface properties of a release liner and the adhesion properties of the sticky surface of the adhesive material. As far as the cohesion is larger than the adhesion it occurs only an elastic behavior within the adhesive material, resulting in an accurate separation of the release liner and the adhesive material at their interface. When the adhesion is larger than the cohesion, for instance due to a slow peeling off the release liner, a viscous behavior of the adhesive material occurs resulting in stretching and/or elongation of the adhesive material, while the adhesive material keeps sticking to the liner.

Within the automotive industry, adhesive components such as trim panels or damping materials are widespreadly used to cover hard surfaces of car interiors and to reduce noise emissions. Due to the long term use of such adhesive components and vibration stress during operation time, the sticky surface of adhesive materials in general have a high adhesion property. Due to the high requirements for components used for automotive applications, the adhesive material often consists of a butyl rubber-based adhesive to which a backing layer (e.g., constraint film or a molded trim part panel) is attached, while the opposed sticky adhesive side is covered with a release liner.

In order to reduce application costs for adhesive trim panels or damping panels, the application process can be performed fully automated at automotive plants using robots that pick up the individual pieces, remove the release liner and place the adhesive panels to their position. To the automated process, the peeling of the release liner from the adhesive surface is performed uniformly and at a high velocity, which in general reduces the problems occurring during the peeling off the release liner. However, mostly in summer when temperature conditions in automotive factories are rather high, the adhesive material of the trim and damping panels, especially if butyl rubber-based adhesive is used, softens and starts bleeding, which increases the adhesion of the bond especially at the side wall of the adhesive material layers i.e. in a region where the peeling off starts. Furthermore, because of the higher temperature, the e-module of the adhesive material is somewhat lower. Due to the increased adhesion and the reduced cohesion at higher temperatures, the peeling of the release liner more often results in the stretching and/or elongation of the adhesive material, which might cause application failures.

In the art, several methods are known to avoid the above mentioned problem or to reduce the problems arising from the worse material properties at higher temperatures. At a wedged peeling process, the release liner is removed by pulling the liner over a sharp wedge which is mounted above a plane component as described in EP 298200 A2. However, the wedge peeling method does not work in the case where the backing material laminated to the adhesive layers is not sufficiently stiff or has an uneven profile, as is the case for most automotive applications. A further method to avoid the problems arising from the high temperature conditions in summer, is to cool the adhesive components to at least conditions comparable to a winter situation when the problem of stretching or elongation of the adhesive material does not occur. Document US 6,210,524 B1 describes cooling of the peeling edge of the release liner below at least 20° C to improve the peeling of the release liner from the adhesive substrate. However, even if the cooling of the adhesive components prior to their application seems to be an applicable solution, it increases the energy aqmount used in the production process and impedes the material supply. Furthermore, with respect to an industrial environment such as an automotive factory, the cooling of components might raise further logistic and/or application problems.

Accordingly, there is an existing need to improve the removal process separating a releasable substrate from the sticky surface of an adhesive material to avoid the problems occurring with the respective methods used in the state of the art.

This problem is solved by a generic process in that, after fixing the releasable substrate with respect to the adhesive material, an impact is provided to the releasable substrate and/or the adhesive material to at least reduce adhesion between the releasable substrate and the adhesive material in a predetermined area prior to peeling of the substrate from the adhesive material.

The impact provided to the releasable substrate and/or the adhesive material induces a short-term, high-impulse force to the releasable substrate, which may be specified as a short time, high shock on the bond between the releasable substrate and the adhesive material. Due to the short-term impulse the removal process between the releasable substrate and the sticky material is performed in a different frequency area than in a normal process for peeling of a substrate. The adhesive material, especially if butyl rubber based adhesives are used, reacting to such a temporary shock much more within its elastic behavior, as within the short time this high impact force is applied to the component only a small viscous reaction is possible. Once the strong adhesion between the sticky material and the releasable substrate is reduced or preferably broken, the removal process of the releasable substrate can continue in a common way without any problem. The impact force and the impact time strongly depend on the viscous-elastic properties of the adhesive material or the adhesive layers. Furthermore, for a good response of the adhesive material to the short-term high force shock, the impact is directed to the portion of the releasable substrate and/or the adhesive material that is fixed with respect to each other.

The preferred solution for providing an impact to the releasable substrate and/or the sticky material is an air pulse. This air pulse may be generated by an air nozzle placed above the adhesive component, but having no contact to the adhesive component. Such an air pulse provides a high force impulse to the releasable substrate without any contact to the adhesive material and/or releasable substrate and thus generating a contact-free initial loosening of the releasable substrate.

As an alternative possibility for providing an impact, a mechanical impulse to the releasable substrate and/or the sticky material is provided having a direct contact to the component. Such a mechanical kick may be controlled by a pneumatic, electrical, magnetic or mechanical actuator. Due to the direct contact, a respective contacting tip can be designed with respect to the required impact force and impact time , i.e. adapted to the visco-elastic properties of the different adhesive material. Furthermore, the direct contact and use of a respective tip allows a well-directed orientation and pointing of the impact.

In common embodiments, such as trim and damping material for automotive applications, the releasable substrate is a release liner or backing material attached to the sticky surface of the adhesive material, while the adhesive material comprises one or more adhesive layers with or without a backing.

For easy fixing and unfixing, fixing means are used for fixing the releasable substrate with respect to adhesive material such as suction caps or clamps, which are commonly used with robots for automated fabrication. At least one suction cup can be attached to the adhesive material so that a robot for fully automated production can pick up the individual components. A clamp may be attached to the releasable substrate for easy fixing the substrate with respect to the sticky material, wherein the releasable substrate can be peeled off by moving the at least one suction cap with respect to the clamp.

In a preferred solution, the impact is directed to an area of the releasable substrate and/or the adhesive material located between the at least one suction cap attached to the adhesive material and the clamp attached to the releasable substrate. Thus, the short term shock of the impact is positioned within an area in that the releasable substrate is clearly fixed with respect to the sticky material avoiding dissipation of the impact force. Furthermore, the suction cap attached to the adhesive material and the clamp attached to the releasable substrate for fixing the releasable substrate with respect to the adhesive material are preferably moved relative to each other for peeling off the substrate from the adhesive material, so that the peeling off starts in the vicinity of the predetermined area having an at least reduced adhesion between the releasable substrate and the adhesive material due to the impact.

The present invention is further directed to a release apparatus for separating a release liner from an adhesive material comprising fixing means for fixing the adhesive material and fixing means for fixing the release liner with respect to the adhesive material and for peeling off a release liner from the adhesive material and further comprising an impact unit providing a force impact to the release liner and/or the adhesive material to at least reduce adhesion between the release liner and the adhesive material in a predetermined area prior to the peeling off the release liner.

The release apparatus of the present invention allows a safe and easy removal of the release liner from an adhesive component such as adhesive trim panels or damping panels. The force impact provided by the impact unit to the release liner and/or the adhesive material provides a reduction of the adhesion between the release liner and the adhesive surface of the adhesive material in a predetermined area prior to the peeling of the release liner. The reduction of the adhesion leads to an initial loosening of the release liner from the sticky surface or to a breaking of the bond at the interface between the release liner and the adhesive material. After such an initial loosening or breaking of the bond, the removal process of the release liner can be performed in a normal fashion, even though the ambient conditions of the release apparatus commonly would lead to problems with the peeling of the release liner if a normal removing process without an impact is used. Thus, within the automotive industry, the use of a release apparatus according to the present invention allows the removal of the release liner from trim panels or damping materials without any application failures, even though in high summer temperature conditions, the cohesion of the adhesive material is low due to a lower e-module of the adhesive and the adhesion at the interface of release liner and adhesive surface is high due to a more soft adhesive material and a possible bleeding of the adhesive material.

The impact unit for providing a force impact to an adhesive component, i.e. an adhesive material with or without a backing and a release liner attached to the sticky surface of the adhesive material, can be designed as an air nozzle providing a strong air pulse to the adhesive component for high-speed shock treatment of the release liner. A further possible solution for the impact unit is a mechanical pulse unit which is controlled by a pneumatic, electrical, magnetic or mechanical process. A mechanical kick to the adhesive component by the mechanical pulse unit also may provides a high-speed shock treatment of the release liner to generate an initial loosening of the liner.

The force impact to the release liner and/or the adhesive material providing a high-speed shock interaction between the release liner and the adhesive material leading to an initial reaction in a high frequency area at the interface thereof resulting in a loosening of the release liner, as the force impact is responded within in the elastic mode of the adhesive material.

In a further embodiment, the fixing means for fixing the adhesive material is at least one suction cap positioned on the surface of the adhesive material opposite the release liner. Suction caps for fixing the adhesive material allow transformation of the release apparatus to a robot for automated fabrication. To improve the automated application, it is advantageous that the fixing means for fixing the release liner is a clamp positioned on a portion of the release liner exceeding the adhesive material. The fixing of the release liner on a portion exceeding the adhesive material allows the fixing of the release liner for the impact to the release liner and/or the adhesive material and further directly allows the subsequent peeling of the release liner form the adhesive material.

A method to separate a sticky material from a releasable substrate attached to the sticky material and the respective release apparatus, according to the present invention is described by the following drawings. The drawings show:
- Figure 1: a perspective view in principle of a release apparatus according to the present invention; and
- Figure 2: a prospective view on the release apparatus of Figure 1 showing the process of separation method according to the present invention.

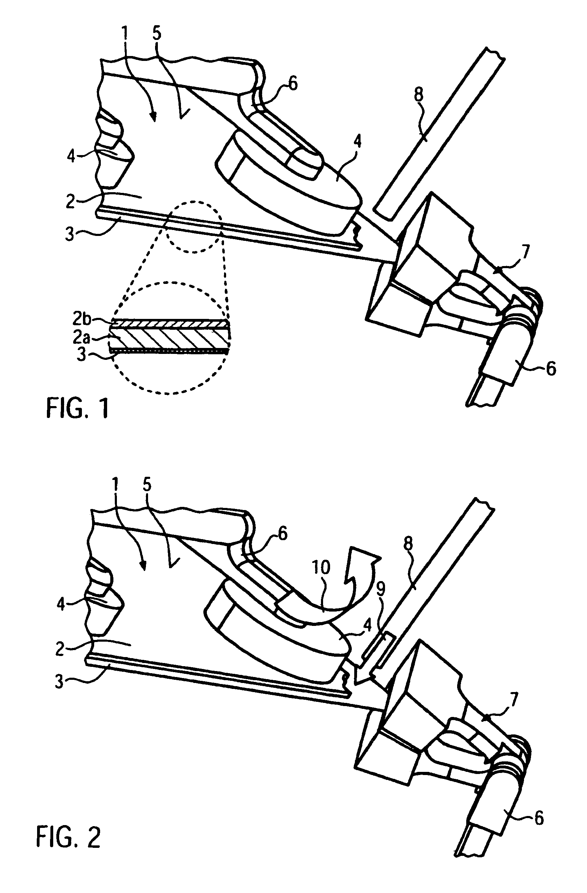

The release apparatus of Figure 1 is designed as a robot to pick up the adhesive component 1, wherein only the relevant components of the robot are shown. The adhesive component 1 is to be attached by adhesion to a greater workpiece. The adhesive component 1 consists of an adhesive material 2 and a release liner 3. The adhesive material 2 comprises an adhesive layer 2a with or without a backing 26, such as a plastic film, a fabric, a damping material or a mold component, or the adhesive material 2 comprises stacks of adhesive layers 2a with or without backing 2b. Opposite to the backing 2b, the release liner 3 is attached to the adhesive material 2, wherein the release liner 3 is held in position by the adhesion of the sticky surface of the adhesive material 2.

The adhesive component 1 is held by suction heads 4, placed on the backing surface 5 of the adhesive component 1. The suction heads 4 and the adhesive component attached thereto are attached to and moved by the robot (not shown) via the robot arms 6. A clamp 7 attached and moved by the robot via a further robot arm 6, having upper and lower gripper for fixing the release liner 3 at a portion laterally exceeding the adhesive material 2. Between the suction head 4 positioned on the backing surface 5 of the adhesive material 2 and the clamp 7 fixing the portion of the release liner 3 exceeding the adhesive material 2, an air nozzle 8 is positioned directed to the laterally exceeding portion of the release liner 3. However, any other position of the air nozzle 8, above the backing surface of the adhesive material 2, and from the downside of the adhesive component 1, the side of the release liner 3, is possible.

As shown in Figure 2, the air nozzle 8 provides an air pulse 9 to the portion of the release liner 3 exceeding laterally the adhesive material 2. The air pulse 9 providing an impact to the release liner 3. However, depending on the position of the air nozzle 8, the air pulse 9 and the related impact to the release liner and/or the adhesive material can also be directed to the adhesive material 2 or the downside of the release liner 3. The air pulse 9 applying a short-term high-impact force on the release liner 3, that can be regarded as a shock to the adhesive component 1. The short-term high-force shock results in a removal process of the release liner 3, that is happening in a different frequency area than in a normal peeling off process. Due to the high-force impact at high frequency, the adhesive reacts only in its elastic mold, so that merely the whole force impact of the air pulse 9 is directed to the adhesive connection between the release liner 3 and the adhesive material 2. Thus, the high frequency shock breaks the connection between the release liner 3 and the adhesive material 2 at least in a predetermined area, preferably in the vicinity of the portion of the release liner 3 where the peeling off starts.

Once the adhesion between the release liner 3 and the adhesive material 2 is reduced or the bond is broken, the release liner 3 can be peeled off the sticky surface of the adhesive material 2 by a normal peel-off movement 10 of the adhesive material 2 fixed by the suction heads 4 with respect to the release liner 3 fixed to clamp 7. The peel off movement 10 first moves the adhesive material 2 via the robot arm 6 in direction to the clamp 7 holding the release liner 3 and then moves upwards and backwards, wherein the backward movement increases with the length of the release liner 3 peeled of the adhesive material 2. Due to the initial loosening of the release liner 3 from the adhesive material 2, the removal process of the release liner 3 is performed without any problems, even if the ambient temperatures are high and the bond between the adhesive material 2 and the release liner 3 is increased due to bleeding of the adhesive. After the peel off movement 10 is performed resulting in a complete removal of a release liner 3, the adhesive material is attached with its sticky surface to a greater workpiece by the related robot.

## Claims

1. Method to separate an adhesive material (2) from a releasable substrate attached to the adhesive material (2) by adhesion using the steps of:
fixing the releasable substrate with respect to the adhesive material (2);
providing an impact to the releasable substrate and/or the adhesive material (2) to at least reduce adhesion between the releasable substrate and the adhesive material in a determined area;
peeling of the releasable substrate from the adhesive material (2).

2. Method of claim 1, wherein the impact is provided by an air pulse (9).

3. Method of claim 1, wherein the impact is provided by a mechanical impulse.

4. Method of one of claims 1 to 3, wherein the releasable substrate is a release liner (3) or a backing material.

5. Method of one of claims 1 to 4, wherein the adhesive material comprises one or more adhesive layers with or without a backing.

6. Method of one of claims 1 to 5, wherein fixing means, such as suction caps (4) and/or clamps (7), are used for fixing the releasable substrate with respect to the adhesive material (2).

7. Method of claim 6, wherein at least one suction cap (4) is attached to the adhesive material (2) and a clamp (7) is attached to the releasable substrate for fixing the releasable substrate with respect to the adhesive material.

8. Method of claim 7, wherein the impact is directed to an area of a releasable substrate and/or the adhesive material (2) located between the at least one suction cap (4) attached to the adhesive material (2) and the clamp (7) attached to the releasable substrate.

9. Method of claim 7 or 8, wherein the suction cap (4) attached to the adhesive material (2) and the clamp (7) attached to the releasable substrate for fixing the releasable substrate with respect to the adhesive material are moved relative to each other for peeling off the releasable substrate from the adhesive material (2).

10. Release apparatus for separating a release liner (3) from an adhesive material (2) comprising fixing means for fixing the adhesive material (2) and fixing means for fixing the release liner (3) with respect to the adhesive material (2) and for peeling off a release liner (3) from the adhesive material (2),
**characterized in** further comprising an impact unit providing a force impact to the release liner (3) and/or the adhesive material (2) to at least reduce adhesion between the release liner (3) and the adhesive material (2) in a predetermined area prior to peeling of the release liner (3).

11. Release apparatus of claim 10, wherein the impact unit is an air nozzle (8).

12. Release apparatus of claim 10, wherein the impact unit is a mechanical pulse unit controlled by a pneumatic, electric, magnetic or mechanical process.

13. Release apparatus of one of claims 10 to 12, wherein the fixing means for fixing the adhesive material (2) is at least one suction cap (4) positioned on surface (5) of the adhesive material (2) opposite the release liner (3).

14. Release apparatus of one of claims 10 to 13, wherein the fixing means for fixing the release liner (3) is a clamp (7) positioned on a portion of the release liner (3) exceeding the adhesive material (2).

## Patentansprüche

1. Verfahren zum Trennen eines Klebematerials (2) von einem lösbaren Substrat, das an dem Klebematerial (2) mittels Haftung angebracht ist, unter Verwendung der folgenden Schritte:
Fixieren des lösbaren Substrats in Bezug auf das Klebematerial (2);
Ausüben eines Stoßes auf das lösbare Substrat und/oder das Klebematerial (2), um wenigstens Haftung zwischen dem lösbaren Substrat und dem Klebematerial in einem vorgegebenen Bereich zu verringern;
Abziehen des lösbaren Substrats von dem Klebematerial (2).

2. Verfahren nach Anspruch 1, wobei der Stoß mit einem Luftimpuls (9) ausgeübt wird.

3. Verfahren nach Anspruch 1, wobei der Stoß mit einem mechanischen Impuls ausgeübt wird.

4. Verfahren nach einem der Ansprüche 1 bis 3, wobei das lösbare Substrat ein Trennpapier (3) oder ein Trägermaterial ist.

5. Verfahren nach einem der Ansprüche 1 bis 4, wobei das Klebematerial eine oder mehrere Klebeschicht/en mit oder ohne einem/einen Träger umfasst.

6. Verfahren nach einem der Ansprüche 1 bis 5, wobei Fixiereinrichtungen, wie beispielsweise Saugnäpfe (4) und/oder Klemmen (7), eingesetzt werden, um das lösbare Substrat in Bezug auf das Klebematerial (2) zu fixieren.

7. Verfahren nach Anspruch 6, wobei wenigstens ein Saugnapf (4) an dem Klebematerial (2) angebracht wird und eine Klemme (7) an dem lösbaren Substrat angebracht wird, um das lösbare Substrat in Bezug auf das Klebematerial zu fixieren.

8. Verfahren nach Anspruch 7, wobei der Stoß auf einen Bereich eines lösbaren Substrats und/oder des Klebematerials (2) gerichtet wird, der sich zwischen dem wenigstens einen an dem Klebematerial (2) angebrachten Saugnapf (4) und der an dem lösbaren Substrat angebrachten Klemme (7) befindet.

9. Verfahren nach Anspruch 7 oder 8, wobei der Saugnapf (4), der an dem Klebematerial (2) angebracht wird, und die Klemme (7), die an dem lösbaren Substrat angebracht wird um das lösbare Substrat in Bezug auf das Klebematerial zu fixieren, relativ zueinander bewegt werden, um das lösbare Substrat von dem Klebematerial (2) abzuziehen.

10. Lösevorrichtung zum Trennen eines Trennpapiers (3) von einem Klebematerial (2), die eine Fixiereinrichtung zum Fixieren des Klebematerials (2) und eine Fixiereinrichtung zum Fixieren des Trennpapiers (3) in Bezug auf Klebematerial (2) sowie zum Abziehen eines Trennpapiers (3) von dem Klebematerial (2) umfasst,
**dadurch gekennzeichnet, dass** sie des Weiteren eine Stoßeinheit umfasst, die einen Kraftstoß auf das Trennpapier (3) und/oder das Klebematerial (2) ausübt, um vor dem Abziehen des Trennpapiers (3) wenigstens Haftung zwischen dem Trennpapier (3) und dem Klebematerial (2) in einem vorgegebenen Bereich zu verringern.

11. Lösevorrichtung nach Anspruch 10, wobei die Stoßeinheit eine Luftdüse (8) ist.

12. Lösevorrichtung nach Anspruch 10, wobei die Stoßeinheit eine mechanische Impulseinheit ist, die mittels eines pneumatischen, elektrischen, magnetischen oder mechanischen Prozesses gesteuert wird.

13. Lösevorrichtung nach einem der Ansprüche 10 bis 12, wobei die Fixiereinrichtung zum Fixieren des Klebematerials (2) wenigstens ein Saugnapf (4) ist, der an der dem Trennpapier (3) gegenüberliegenden Fläche (5) des Klebematerials (2) positioniert ist.

14. Lösevorrichtung nach einem der Ansprüche 10 bis 13, wobei die Fixiereinrichtung zum Fixieren des Trennpapiers (3) eine Klemme (7) ist, die an einem Abschnitt des Lösepapiers (3) positioniert ist, der über das Klebematerial (2) hinausreicht.

## Revendications

1. Procédé de séparation d'un matériau adhésif (2) par rapport à un substrat détachable fixé par adhérence au matériau adhésif (2), utilisant les étapes consistant à :
fixer le substrat détachable par rapport au matériau adhésif (2) ;
communiquer un impact au substrat détachable et/ou au matériau adhésif (2) pour au moins diminuer l'adhérence entre le substrat détachable et le matériau adhésif dans une zone déterminée ;
arracher le substrat détachable du matériau adhésif (2).

2. Procédé selon la revendication 1, dans lequel l'impact est communiqué par une impulsion d'air (9).

3. Procédé selon la revendication 1, dans lequel l'impact est communiqué par une impulsion mécanique.

4. Procédé selon l'une des revendications 1 à 3, dans lequel le substrat détachable est un revêtement anti-adhérent (3) ou un matériau de support.

5. Procédé selon l'une des revendications 1 à 4, dans lequel le matériau adhésif comprend une ou plusieurs couches adhésives avec ou sans support.

6. Procédé selon l'une des revendications 1 à 5, dans lequel des moyens de fixation, tels que des ventouses (4) et/ou des pinces (7), sont utilisés pour fixer le substrat détachable par rapport au matériau adhésif (2).

7. Procédé selon la revendication 6, dans lequel au moins une ventouse (4) est fixée au matériau adhésif (2) et une pince (7) est fixée au substrat détachable pour fixer le substrat détachable par rapport au matériau adhésif.

8. Procédé selon la revendication 7, dans lequel l'impact est dirigé vers une zone d'un substrat détachable et/ou le matériau adhésif (2) situé entre l'au moins une ventouse (4) fixée au matériau adhésif (2) et la pince (7) fixée au substrat détachable.

9. Procédé selon la revendication 7 ou 8, dans lequel la ventouse (4) fixée au matériau adhésif (2) et la pince (7) fixée au substrat détachable pour fixer le substrat détachable par rapport au matériau adhésif sont déplacés l'une par rapport à l'autre pour arracher le substrat détachable du matériau adhésif (2).

10. Dispositif de libération pour séparer un revêtement anti-adhérent (3) d'un matériau adhésif (2) comprenant un moyen de fixation pour fixer le matériau adhésif (2) et un moyen de fixation pour fixer le revêtement anti-adhérent (3) par rapport au matériau adhésif (2) et pour arracher un revêtement anti-adhérent (3) du matériau adhésif (2),
**caractérisé en ce qu'**il comprend en outre une unité d'impact communiquant une force d'impact au revêtement anti-adhérent (3) et/ou au matériau adhésif (2) pour au moins réduire l'adhérence entre le revêtement anti-adhérent (3) et le matériau adhésif (2) dans une zone prédéterminée avant d'arracher le revêtement anti-adhérent (3).

11. Dispositif de libération selon la revendication 10, dans lequel l'unité d'impact est une buse d'air (8).

12. Dispositif de libération selon la revendication 10, dans lequel l'unité d'impact est une unité d'impulsion mécanique commandée par un processus pneumatique, électrique, magnétique ou mécanique.

13. Dispositif de libération selon l'une des revendications 10 à 12, dans lequel le moyen de fixation pour fixer le matériau adhésif (2) est au moins une ventouse (4) positionnée sur la surface (5) du matériau adhésif (2) opposée au revêtement anti-adhérent (3).

14. Dispositif de libération selon l'une des revendications 10 à 13, dans lequel le moyen de fixation pour fixer le revêtement anti-adhérent (3) est une pince (7) positionnée sur une partie du revêtement anti-adhérent (3) dépassant le matériau adhésif (2).
